# EUROPEAN PATENT SPECIFICATION

(11) **EP 3 231 242 B1**
(45) Date of publication and mention of the grant of the patent: **19.09.2018**
(21) Application number: 14809035.0
(22) Date of filing: 09.12.2014
(51) Int. Cl.: H04W 74/00, H04W 74/08

(54) **ACCESS MANAGEMENT OF A COMMUNICATION DEVICE IN A CELLULAR NETWORK**
ZUGRIFFSVERWALTUNG EINER KOMMUNIKATIONSVORRICHTUNG IN EINEM ZELLULAREN NETZWERK
GESTION D'ACCÈS D'UN DISPOSITIF DE COMMUNICATION DANS UN RÉSEAU CELLULAIRE

(43) Date of publication of application: 18.10.2017
(73) Proprietor: Telefonaktiebolaget LM Ericsson (publ), 164 83 Stockholm (SE)
(72) Inventor: RUNE, Johan, SE-181 29 Lidingö (SE); STATTIN, Magnus, 194 44 Upplands Väsby (SE); KAROUT, Johnny, SE-417 29 Göteborg (SE)
(74) Representative: Ericsson
(86) International application number: PCT/EP2014/077001
(87) International publication number: WO 2016/091285

(56) References cited:
- EP-A1- 2 637 454
- WO-A1-2014/088479
- US-A1- 2013 051 325
- US-B1- 7 436 801
- PANTECH: "eWaitTime related procedure", 3GPP DRAFT; R2-111296, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Taipei, Taiwan; 20110221, 16 February 2011 (2011-02-16), XP050493809, [retrieved on 2011-02-16]

## Description

### Technical Field

The present invention relates to a management of an access attempt for accessing a cellular network, and to corresponding methods, a corresponding communication device, radio network node and communication system, and corresponding computer programs and computer program products.

### Background

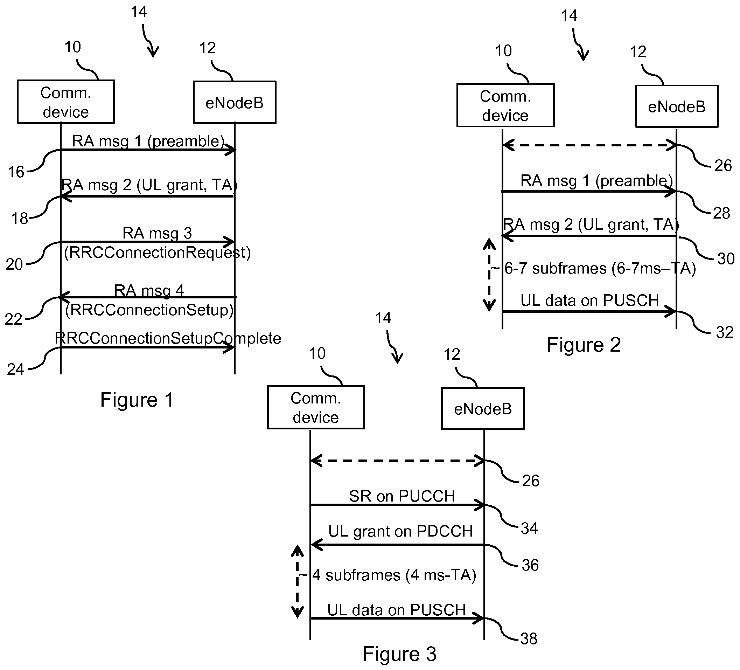

A communication device may perform an access attempt to access a cellular network. Without loss of generality, it is referred to in the following to Long Term Evolution (LTE) radio access technology from which different access attempt procedures are known and are illustrated in Figs. 1 to 3.

A first example of an access attempt procedure relates to a contention-based random access attempt performed by a communication device for initially accessing a cellular network and for data transmission. To this end, the communication device 10, which is in the beginning of the access attempt in its idle mode commonly known as idle state, sends a Random Access (RA) request message 1 (indicated throughout all Figures by RA msg 1) to a radio network node (RNN) 12 of the cellular network 14 in a step 16 on the Physical Random Access Channel (PRACH). The RNN 12 is embodied as an eNodeB in LTE. This message comprises a preamble which has been selected by the communication device 10 from two groups of available preambles in a random way. The eNodeB 12 sends a Random Access message 2 (indicated throughout all Figures by RA msg 2) in the form of a Random Access Response (RAR) in a step 18 to the communication device 10 based on the received RA message 1. The RAR message 2 includes, among others, an uplink (UL) grant and UL synchronization information indicating a transmission timing of the communication device 10 with respect to a transmission timing of the radio network node 12, namely a Timing Advance (TA) value. In this respect, the term "uplink" denotes a transmission direction from the communication device 10 to the cellular network 14. In a step 20, the communication device 10 sends a RA message 3 (indicated throughout all Figures by RA msg 3) which includes a RRCConnectionRequest message to the eNodeB 12 using the TA. The eNodeB 12, in turn, sends a RA message 4 (indicated throughout all Figures by RA msg 4), including a RRCConnectionSetup message, in a step 22 to the communication device 10 for contention resolution. The random access attempt procedure is thereby completed and followed by the communication device 10 sending a RRCConnectionSetupComplete message to the eNodeB 12 in a step 24. In sum, the communication device 10 has performed a transition from its idle mode to its connected mode commonly referred to as RRC connected state and is thus enabled to transmit data.

In a second example of an access attempt, the communication device 10 is in its connected mode, i.e. a RRC-connected state, and attempts to access the cellular network 12 for data transmission. The communication device 10 may have already exchanged signalling with the cellular network 14, as indicated in Figs. 2, 3 by means of a dashed double-sided arrow 26. Fig. 2 illustrates a case in which the communication device 10 has lost its UL synchronization with the eNodeB 12 and Fig. 3 illustrates a case in which the communication device 10 has a valid UL synchronization with the eNodeB 12 and allocated resources on a Physical Uplink Control Channel (PUCCH). In the case the communication device 40 has a valid UL synchronization, but lacks allocated PUCCH resources, the access procedure of Fig. 2 is followed. Referring to Fig. 2, the communication device 10 performs a contention-resolved random access attempt procedure to access the cellular network 14 and, in particular, the RNN 12 by sending a RA message 1 including a preamble in a step 28. The eNodeB 12 may send a RA message 2 including an UL grant and a TA value in a step 30 to the communication device 10. About six to seven sub-frames later corresponding to 6 milliseconds (ms) to 7 ms minus the previously received TA value, the communication device 10 sends in a step 32 UL data on a Physical Uplink Shared Channel (PUSCH). Referring to Fig. 3, the communication device 10 sends in a step 34 a Scheduling Request (SR) on PUCCH. The eNodeB 12 sends an UL grant on a Physical Downlink Control Channel (PDCCH) in a step 36 in response to the received SR. In this respect, the term "downlink" (DL) denotes a transmission direction from the cellular network 14 to the communication device 10. Approximately four subframes later corresponding to 4 ms minus the TA value, the communication device 10 sends UL data on PUSCH to the eNodeB 12 in a step 38.

A communication device attempting to access the cellular network by means of the above described access attempts may experience that the access attempt may fail. This failure may be caused, for example, by already present load on an air interface between the communication device and the RNN and/or involved processing resources on the network side due to other access attempt procedures. This present load may involve manifold reasons. For example, numerous communication devices may access in parallel the RNN or machine type communication (MTC) communication devices such as sensors may be triggered by a common incident to simultaneously attempt to access the cellular network. A poor configuration of an application running on one or more communication devices may also cause frequent access attempts. Additional control signalling involved by these access attempts may impact the processing resources of the RNN and involved core network nodes of the cellular network.

In sum, such generated load may add to already present load related to access attempts on the network side, and this may come along with a poor end user experience of an end user associated with the concerned communication device currently attempting to access the cellular network.

There are measures known in LTE how to control load associated with an access attempt of a communication device for accessing the cellular network. In one option, Access Class Barring (ACB) may be employed which is directed to a network initiated barring of arbitrary communication devices for a certain Access Class (AC) and a certain AC Barring Time (ACBT) period. Such an approach may result in a slow and inflexible load control, since the corresponding AC and ACBT are transmitted by the RNN in broadcasted system information updated on a long time scale.

A further approach may employ a so-called back-off timer whose usage is indicated by the RNN for a communication device whose preamble has not been detected by the RNN or which has lost contention resolution. By means of a back-off indicator, the communication device is prompted to wait for the back-off time before reattempting to access the cellular network in a new random access procedure. This approach may affect all communication devices receiving the same Random Access Response message and can therefore be regarded as an in-parallel solution for one or more communication devices.

In a further more simple approach, the RNN may reject an access request message of the communication device when the communication device initially attempts to access the cellular network. A suitable message used for rejection can be the RRCConnectionReject message. However, the access load may only be reduced on a short term time scale, since the communication device may immediately, or after a short back-off time, attempt to access the cellular network again in a new access attempt procedure.

WO 2014/088479 A1 describes an overload control in a communication network in which a radio network node may request a user equipment by means of a Media Access Control (MAC) Protocol Data Unit (PDU) to extend a time period during which the user equipment may wait for reception of a further RA message 2. If the radio network node determines that the radio network node has sufficient resources available, the radio network node sends the RA message 2 to the user equipment and the random access procedure continues in a regular way. This procedure may apply to a case when the user equipment transits from its idle state to its RRC connected state and to a case in which the user equipment is in its RRC connected state and lacks an uplink synchronization.

US 2013/0051325 A1 describes a method and apparatus for extended access barring (EAB) in a wireless communication system. In the proposed method, EAB application information is defined. Further, a base station is configured to send random access (RA) response within RA response window if it receives any random access preamble, so RA response window should be set as the minimum time duration UE should check the existence of RA response. In the proposed method, the UE configured with EAB should wait the duration of RA response window to receive RA response before skipping initial EAB checking. If RA response window passed and no RA response received, UE skips EAB checking in case of initial random access preamble transmission.

Accordingly, there is a need for an access load control which is fast, resource-efficient and flexible.

### Summary

It is an object of the present invention to provide measures with which load control of load associated with an access attempt of a communication device for accessing a cellular network may be accomplished in a fast, easy and flexible way.

The invention is defined in the independent claims.

According to a first exemplary embodiment, a method of managing an access attempt for accessing a cellular network is provided. The method is performed by a communication device and comprises sending to a RNN of the cellular network an access request message for requesting access to the cellular network, and receiving from the RNN an access response message for the access request message. The access response message comprises a wait indication indicating to wait for a resumption indication before resuming the access attempt. The resumption indication indicates to resume the access attempt. The method further comprises, in response to the received wait indication, waiting to resume the access attempt. The communication device is in an idle mode and the access response message is received after a random access response message. Alternatively, the communication device is in a connected mode and the resumption indication is received via a physical DL control channel. The method further comprises resuming the access attempt in response to the received resumption indication, if the resumption indication is received during the step of waiting.

According to a second exemplary embodiment, a method of managing an access attempt of a communication device for accessing a cellular network is provided. The method is performed by a RNN of the cellular network and comprises receiving from the communication device an access request message for requesting access to the cellular network, and, in response to the received access request message, determining whether sufficient resources are available for serving the communication device. The method comprises, in response to determining that there are not sufficient resources available, sending to the communication device an access response message for the access request message. The access response message comprises a wait indication indicating to wait for a resumption indication before resuming the access attempt. The resumption indication indicates to resume the access attempt. The access attempt is for the communication device in an idle mode and the access response message is sent after a random access response message. Alternatively, the access attempt is for the communication device in a connected mode and the resumption indication is sent via a physical DL control channel. The resumption indication is sent after the wait indication.

In an embodiment, the method further comprises, in association with the step of sending the wait indication, including the communication device in a record of the radio network node.

In an embodiment, the method further comprises applying a prioritization scheme to the communication device and at least one further communication device included in the record, and the step of sending the resumption indication is performed in accordance with the applied prioritization scheme.

In an embodiment, the method further comprises sending to the communication device at least one of:
- a resource indication indicating to the communication device a kind of resources to be monitored for receiving the resumption indication,
- resource allocation information specifying resources allocated on a physical downlink data channel for receiving a data transmission,
- monitoring time information specifying at least one time period during which the monitoring is to be performed,
- delay time information specifying a delay time period during which the communication device is not to monitor after receipt of the wait indication,
- a precedence indication indicating a non-monitoring state of the communication device preceding the monitoring or not preceding the monitoring,
- an indication of a preamble to be used for re-synchronizing an uplink transmission timing of the communication device with the radio network node,
- preamble time information specifying a time period during which an indicated preamble is usable for receiving uplink timing transmission information, and
- uplink transmission timing information specifying a timing of an uplink transmission for the communication device with respect to the radio network node.

According to a third exemplary embodiment, a communication device for managing an access attempt of the communication device for accessing a cellular network is provided. The communication device comprises an interface for communication with a RNN of the cellular network and at least one processor adapted to, via the interface, send to the RNN an access request message for requesting access to the cellular network, and to, via the interface, receive from the RNN an access response message for the access request message. The access response message comprises a wait indication indicating to wait for a resumption indication before resuming the access attempt. The resumption indication indicates to resume the access attempt, and the at least one processor is further adapted to, in response to the received wait indication, wait to resume the access attempt. The communication device is adapted to be in an idle mode and the at least one processor is adapted to receive the access response message after a random access response message. Alternatively, the communication device is adapted to be in a connected mode and the at least one processor is adapted to receive, via the interface, the resumption indication via a physical DL control channel. The at least one processor is further adapted to resume the access attempt in response to the received resumption indication, if the resumption indication is received during the waiting.

In an embodiment, the resumption indication is an explicit indication included in a message or the resumption indication is embodied as a message of an access attempt procedure associated with the access attempt.

In an embodiment, the at least one processor is further adapted to monitor, during at least a part of the waiting, a physical downlink control channel for receiving the resumption indication.

In an embodiment, the communication device is adapted to be in the idle mode, and the at least one processor is further adapted to, during the monitoring, receive, via the interface, from the radio network node resource allocation information via the physical downlink control channel, the resource allocation information specifying resources allocated on a physical downlink data channel for receiving a data transmission, and to, via the interface, receive the resumption indication via the allocated resources.

In an embodiment, the communication device is adapted to be in the connected mode, and the resumption indication is embodied as resource allocation information specifying resources allocated on a physical uplink data channel for transmission of data.

In an embodiment, the communication device is adapted to be in the connected mode, and the resumption indication is embodied as a message being free of resource allocation information specifying resources allocated on a physical uplink data channel for transmission of data.

In an embodiment, the at least one processor is further adapted to, via the interface, receive monitoring time information from the radio network node, the monitoring time information specifying at least one time period during which the monitoring is to be performed, or at least one time period during which the monitoring is to be performed is configured in the communication device.

In an embodiment, the at least one processor is adapted to perform the monitoring irrespectively of the communication device being currently configured to be in a non-monitoring state, or the at least one processor is adapted to perform the monitoring selectively for the communication device being currently configured to be in a monitoring state.

In an embodiment, the at least one processor is further adapted to, via the interface, receive from the radio network node an indication of a preamble to be used for re-synchronizing an uplink transmission timing of the communication device with the radio network node.

In an embodiment, the at least one processor is further adapted to, via the interface, send to the radio network node a new access request message for requesting access to the cellular network, if the resumption indication is not received.

According to a fourth exemplary embodiment, a RNN for a cellular network and for managing an access attempt of a communication device for accessing the cellular network is provided. The RNN comprises an interface for communication with the communication device and at least one processor adapted to, via the interface, receive from the communication device an access request message for requesting access to the cellular network, and to, in response to the received access request message, determine whether sufficient resources are available for serving the communication device. The at least one processor is adapted to, in response to determining that there are not sufficient resources available, send, via the interface, to the communication device an access response message for the access request message. The access response message comprises a wait indication indicating to wait for a resumption indication before resuming the access attempt. The resumption indication indicates to resume the access attempt. The access attempt is for the communication device in an idle mode and the at least one processor being adapted to send the access response message after a random access response message. Alternatively, the access attempt is for the communication device in a connected mode and the at least one processor is adapted to send, via the interface, the resumption indication via a physical DL control channel. The at least one processor is adapted to send the resumption indication after the wait indication.

In an embodiment, the at least one processor is further adapted to, in association with sending the wait indication, include the communication device in a record of the radio network node.

In an embodiment, the at least one processor is further adapted to apply a prioritization scheme to the communication device and at least one further communication device included in the record, and the at least one processor is adapted to send the resumption indication in accordance with the applied prioritization scheme.

In an embodiment, the at least one processor is further adapted to again determine whether sufficient resources are available for serving the communication device, and, in response to determining that there are sufficient resources available, send, via the interface, the resumption indication to the communication device.

In an embodiment, the at least one processor is further adapted to send, via the interface, to the communication device at least one of:
- a resource indication indicating to the communication device a kind of resources to be monitored for receiving the resumption indication,
- resource allocation information specifying resources allocated on a physical downlink data channel for receiving a data transmission,
- monitoring time information specifying at least one time period during which the monitoring is to be performed,
- delay time information specifying a delay time period during which the communication device is not to monitor after receipt of the wait indication,
- a precedence indication indicating a non-monitoring state of the communication device preceding the monitoring or not preceding the monitoring,
- an indication of a preamble to be used for re-synchronizing an uplink transmission timing of the communication device with the radio network node,
- preamble time information specifying a time period during which an indicated preamble is usable for receiving uplink timing transmission information, and
- uplink transmission timing information specifying a timing of an uplink transmission for the communication device with respect to the radio network node.

According to a fifth exemplary embodiment, a communication system is provided. The communication system comprises a communication device according to the third exemplary embodiment and a RNN according to the fourth exemplary embodiment.

According to a sixth exemplary embodiment, a computer program comprising program code to be executed by at least one processor of a communication device is provided. Execution of the program code causes the at least one processor to perform steps of a method according to the first exemplary embodiment.

According to a seventh exemplary embodiment, a computer program product comprising program code to be executed by at least one processor of a communication device is provided. Execution of the program code causes the at least one processor to perform steps of a method according to the first exemplary embodiment.

According to an eighth exemplary embodiment, a computer program comprising program code to be executed by at least one processor of a RNN of a cellular network is provided. Execution of the program code causes the at least one processor to perform steps of a method according to the second exemplary embodiment.

According to a ninth exemplary embodiment, a computer program product comprising program code to be executed by at least one processor of a RNN of a cellular network is provided. Execution of the program code causes the at least one processor to perform steps of a method according to the second exemplary embodiment.

Further embodiments are described in the dependent claims.

Details of such embodiments and further embodiments will be apparent from the following detailed description of embodiments.

### Brief Description of the Drawings

Figs. 1 to 3 are signalling diagrams for schematically illustrating a communication device accessing a RNN of a cellular network in accordance with prior art.
Fig. 4 is a block diagram for schematically illustrating structures of a communication device according to an embodiment of the invention.
Fig. 5 is a block diagram for schematically illustrating structures of a RNN according to an embodiment of the invention.
Fig. 6 is a signalling diagram for schematically illustrating a method according to an embodiment of the invention.
Fig. 7 is a signalling diagram for schematically illustrating embodiments associated with a step of monitoring of the method in Fig. 6.
Figs. 8, 9 are signalling diagrams for schematically illustrating exemplary embodiments associated with a step of receiving a resumption indication of the method in Fig. 6.
Fig. 10 is a signalling diagram for illustrating a method according to a further embodiment of the invention.
Fig. 11 is a signalling diagram for schematically illustrating exemplary embodiments associated with a re-synchronization procedure of the method in Fig. 6 and 10.
Fig. 12 is a signalling diagram for schematically illustrating exemplary embodiments of further steps of the method in Figs. 6 and 10.
Figs. 13, 14 are signalling diagrams for schematically illustrating a method according to respective embodiments of the invention for LTE radio access technology.
Figs. 15, 16 are signalling diagrams for schematically illustrating a method according to respective further embodiments of the invention for LTE radio access technology.

### Detailed Description of Embodiments

In the following, concepts in accordance with exemplary embodiments of the invention will be explained in more detail and with reference to the accompanying drawings, in which like reference numerals refer to like elements or steps, respectively. Optional elements or steps are indicated by a dashed line. The illustrated embodiments relate to concepts for managing an access attempt for accessing a cellular network. The embodiments may specifically refer to a scenario using LTE radio access technology. However, it should be understood that the concepts could also be applied in connection with other radio access technologies, for example, Universal Mobile Telecommunication System (UMTS) radio access technology, LTE-Advanced radio access technology or non-Third Generation Partnership Project (3GPP) radio access technology.

According to the illustrated concepts, a network controlled mechanism for a management of an access attempt of a communication device for accessing a cellular network and, in particular a RNN thereof, is utilized, in order to enable a control of a high load or overload situation performed by the network side. To this end, a communication device sends an access request message for requesting access to the cellular network to the RNN. In response thereto, the RNN, upon receipt of the access request message, determines whether sufficient resources are available for serving the communication device. Such resources may comprise processing resources of the RNN used for receiving, processing and/or sending information related to the access attempt and/or resources used on an air interface between the communication device and the RNN in association with transmitting information related to the access attempt. In this regard, the resources on the air interface can be allocated by the RNN. If the determination is in the affirmative, the RNN sends an access response message for the access request message to the communication device. In this respect, an access response message may correspond to an expected response message to the access request message in view of a signalling exchange associated with the access attempt. The access response message comprises a wait indication indicating to the communication device to wait for a resumption indication before resuming the access attempt. The resumption indication, in turn, indicates to the communication device to resume the access attempt, for example by proceeding with the currently performed access attempt procedure associated with the access attempt. In response to the received wait indication, the communication device waits to resume the access attempt.

In a first option of the concepts, the communication device is in or occupies an idle mode. In this respect, the idle mode may relate to a state of the communication device in which the communication device may attempt to find and maintain service from the cellular network, attempt to establish a connection to the cellular network and may be enabled to receive incoming connections. In this option, the access response message is received after a random access response message or after any random access response message of the access attempt which may have been sent from the RNN to the communication device previously. In a second option of the concepts, the communication device is in or occupies connected mode. In this respect, the connected mode may relate to a state in which the communication device may comprise an established connection with the RNN of the cellular network. In this option, the resumption indication is received via a physical DL control channel from the RNN. In this respect, the physical DL control channel may refer to resources which may be, for example, defined in time and frequency and may be, particularly exclusively, used for transmission of control information.

It is noted that the involved communication device and RNN may support both options of the described concepts in parallel, however, may apply only one of the two options at the same time for one concerned communication device.

Sending the access response message after the or any random access response message may allow for delaying the access attempt for a long time by employing only one signalling transfer, such that the described concepts according to the first option may enable a flexible, efficient and easy load control.

Sending the resumption indication on the physical DL control channel may enable a short and efficient signalling flow for the described concepts according to the second option. Further, this measure may enable a more resource efficient mechanism for transferring the resumption indication, since only resources on the physical DL control channel and not additionally on a physical DL data channel are employed. In this respect, a physical DL data channel may relate to resources which may be, for example, defined in time and/or frequency and which may be used for transmission of payload data and optionally of control data.

In both options, the method may allow for a fast load control for load impacting the resources and caused by one or more access attempts, since the RNN may immediately react onto sharp load increases perceived for the available resources and therefore may reduce resource congestion by making the communication device wait before further continuing the access attempt. Further, the described management may relate to a resource efficient procedure, since additional signalling associated with transmission of the wait indication and the resumption indication, respectively, may require marginal load. Further, an energy consumption of the communication device may be reduced, for example by avoiding a restart of the access attempt procedure or additional messaging associated with other kinds of load control. The described management may further enable a flexible load control mechanism, since the access attempt procedure may proceed immediately when being determined by the RNN that the involved resources are freed up again. Resource congestion may also be reduced on a per device basis such that granularity of load control may be accomplished. Already present load of the resources might not be added to by the described concepts.

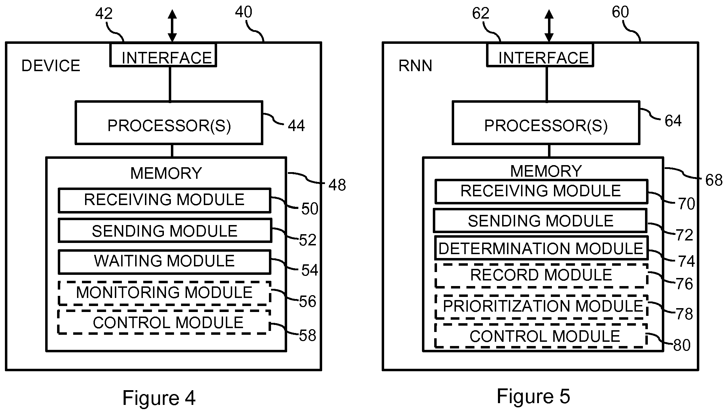

Fig. 4 illustrates exemplary structures of a communication device 40 for implementing the herein described concepts. The communication device 40 may be embodied, for example, in a mobile phone, a tablet, a Personal Digital Assistant (PDA) or the like. The communication device 40 may also be embodied as a machine device, operating autonomously without involvement of a human user, such as a MTC device. The communication device 40 may include an interface 42 for communication with a RNN, for example a RNN described later with reference to Fig. 5. The interface 42 may comprise or may be embodied as a radio interface. The interface 42 may be utilized for sending the access request message, for receiving the access response message, and optionally other information or indications such as the resumption indication. Further, the communication device 40 includes one or more processors 44 coupled to the interface 42, and optionally a memory 48 coupled to the one and more processors 44. The memory 48 may include a Random Only Memory (ROM), for example a flash ROM, a Random Access Memory (RAM), for example a dynamic RAM (DRAM) or static RAM (SRAM), a mass storage like a hard disk or a solid state disk or the like. The memory 48 includes suitable configured program code to be executed by the one or more processors 44, so as to implement the above and below described functionalities of the communication device 40. In particular, the memory 48 may include various program code portions referred to as modules for causing the communication device 40 to perform processes in relation to the herein described method steps according to the described concepts. As illustrated, the memory 48 may store a receiving module 50 for implementing functionalities related to receiving an access response message and optionally other information or indications such as the resumption indication, a sending module 52 for implementing functionalities relating to sending the access request message and optionally other information or indications, a waiting module 54 for implementing functionalities related to the step of waiting to resume the access attempt, an optional monitoring module 56 for implementing functionalities related to monitor a physical DL control channel and an optional control module 58. The control module 58 may enable an implementation of various control functionalities related to the management of the access attempt performed by the communication device 40, for example controlling a mode to be occupied by the communication device 40. Hence, the communication device 40 may be adapted to perform the herein described method steps according to the described concepts.

Fig. 5 illustrates exemplary structures of a RNN 60 for implementing the herein described concepts. The RNN 60 may be embodied for example as a eNodeB, a NodeB, a Base Station Transceiver (BTS) or a Radio Network Controller (RNC). As illustrated, the RNN 60 may include an interface 62 for communication with a communication device, for example the communication device 40 illustrated in Fig. 4. The interface 62 may comprise or may be embodied as a radio interface. The interface 62 may be utilized for receiving the access request message, sending the access response message and optionally other information or indications such as the resumption indication. The RNN 60 includes one or more processors 64 coupled to the interface 62, and a memory 68 coupled to the one or more processors 64. The memory 68 may include a Random Only Memory (ROM), for example a flash ROM, a Random Access Memory (RAM), for example a dynamic RAM (DRAM) or static RAM (SRAM), a mass storage like a hard disk or a solid state disk or the like. The memory 68 includes a suitable configured program code to be executed by the one or more processors 64 so as to implement functionalities associated with the management of the access attempt performed by the RNN 60. In particular, the memory 68 may include various program code portions referred to as modules for causing the RNN 60 to perform processes described herein in association with the method of managing an access attempt for accessing a cellular network. As illustrated, the memory 68 comprises a receiving module 70 for implementing functionalities as to receiving the access request message and optionally other information such as a preamble. Further, the memory 68 comprises a sending module 72 for implementing functionalities relating to sending the access response message and optionally other information or indications such as the resumption indication. A determination module 74 stored in the memory 68 implements functionalities relating to, particularly repeatedly, determining whether sufficient resources are available for serving the communication device. An optional record module 76 of the memory 68 implements functionalities relating to keeping a record about communication devices, for example the communication device 40, to which a respective wait indication will be sent and/or has been sent. An optional prioritization module 78 of the memory 68 implements functionalities relating to applying a prioritization scheme to the communication devices included in the record. An optional control module 80 of the memory 68 may implement various control functionalities related to the management of the access attempt, such as the sending and/or receiving of messages and/or information to and from the communication device.

It is to be understood that the structures illustrated in Figs. 4, 5 are merely schematic and that the communication device 40 and the RNN 60 may actually include further components which, for the sake of clarity, have not been illustrated, for example further interfaces or processors. It is also to be understood that the memory 48, 68 may include further types of program code modules, which have not been illustrated, for example program code modules for implementing known functionalities of the communication device 40 or the RNN 60, respectively. According to some embodiments, a computer program comprising the above described program code may be provided for implementing functionalities of the communication device 40 or the RNN 60, respectively. According to some embodiments, a computer program product comprising the aforementioned program code may be provided, which product may be, for example, in the form of a physical medium storing the computer program and/or may be adapted as a signal to be made available by download or by streaming.

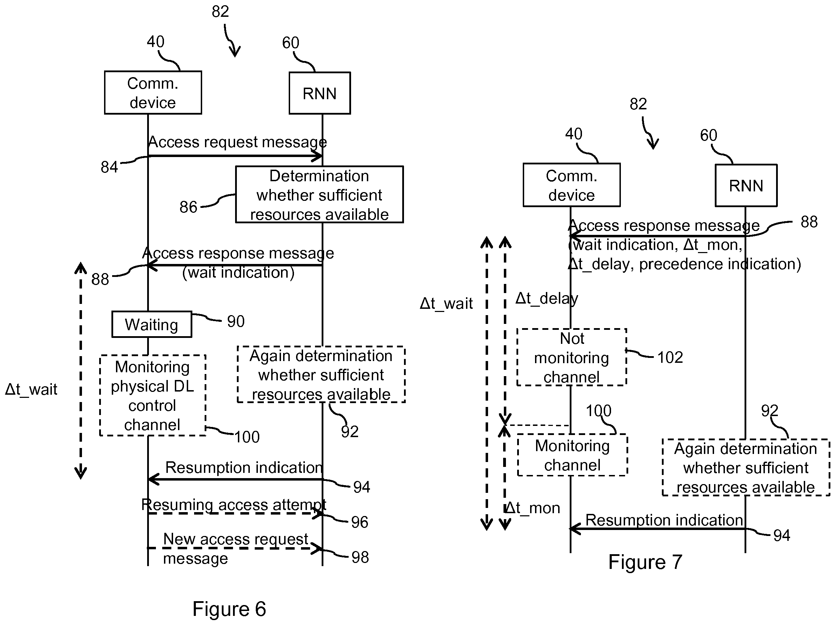

Fig. 6 shows a signalling diagram for illustrating a method for managing an access attempt for accessing a cellular network according to an embodiment. Involved entities are a communication device, for example the communication device 40 of Fig. 4, and a RNN of a cellular network 82, for example the RNN 60 of Fig. 5.

The communication device 40 sends an access request message to the RNN 60 of the cellular network 82 in a step 84. The access request message may serve for requesting access of the communication device 40 to the cellular network 82. The RNN 60 determines in a step 86, based on the received access request message, whether sufficient resources are available for serving the communication device 40. Such resources may be resources on the air interface and/or internal resources of the RNN 60. If the determination is in the affirmative, the RNN 60 sends in a step 88 an access response message comprising a wait indication to the communication device 40. The wait indication indicates to the communication device 40 to wait for a resumption indication to be sent by the RNN 60 before resuming the currently performed access attempt. The resumption indication, in turn, indicates to the communication device 40 to resume the currently performed access attempt. If the determination in the step 86 might not be in the affirmative, the method may stop. In response to the received access response message including the wait indication, the communication device 40 waits in a step 90 to resume the access attempt by, for example, entering a wait state.

As described above in connection with the first option of the concepts, the access attempt relates to an access attempt for a communication device 40 in an idle mode and may be used for the communication device 40 when initially accessing the cellular network 82, such that the access response message is received after a random access response message. This random access response message may correspond to the RA message 2 in the step 18 of Fig. 1 or to any other random access message such as that comprising a MAC PDU.

With regard to the above-described second option of the concepts, the communication device 40 may be in its connected mode, and the resumption indication is transferred via a physical DL control channel.

In an optional step 92, the RNN 60 may again determine whether sufficient resources may be available for serving the communication device 40, and if this determination is in the affirmative, the RNN 60 may send the resumption indication in a step 94 to the communication device 40. This further determination in the step 92 may be performed repeatedly, i.e. two or more times, and/or at any time between the steps 88 and 94. Therefore a smooth continuation of the access attempt can be initiated by the RNN 60 immediately when the resources are freed-up again. Upon receipt of the resumption indication in the step 94, the communication device 40 may terminate the step 90 of waiting and may resume in a step 96 the access attempt by sending, for example, a subsequent message in a signalling exchange flow of an access attempt procedure associated with the access attempt.

If the determination in the step 92 might not be in the affirmative, the RNN 60 might not send the resumption indication. If the RNN 60 might not send the resumption indication at all or may send the resumption indication after the communication device 40 may have terminated the step 90 of waiting, the communication device 40 may send in a step 98 a new access request message for requesting access to the cellular network 82. I.e., the communication device 40 may initiate a new, i.e. an additional, access attempt for accessing the cellular network 82.

As illustrated, the step 90 of waiting may be associated with a time period during which the communication device 40 waits (indicated throughout the Figures by Δt_wait). A maximum length of this time period may be either preconfigured in the communication device 40, for example by hardcoding and/or by means of software configuration, or information related thereto may be received from the RNN 60, for example in the access response message or any configuration message like broadcasted system information. This information is also indicated throughout the Figures by Δt_wait. Therefore the maximum delay of the access attempt may be limited to an acceptable time amount, therefore increasing the user experience in relation to the performed access attempt.

During the step 90 of waiting, the communication device 40 may monitor in an optional step 100 physical DL control channel resources for receiving the resumption indication, so that resources usually utilized for receipt of control information are beneficially also employed. Figs. 7 to 9 illustrate exemplary embodiments associated with this step 100.

According to some embodiments, the communication device 40 may monitor the respective channel continuously, i.e. without interruption, or repeatedly in time periods, i.e. with one or more interruptions between two monitoring time periods. To this end, the communication device 40 may receive, for example from the RNN 60, monitoring time information (indicated throughout the Figures by Δt_mon). This information specifies at least one time period during which the step 100 is to be performed by the communication device 40 (also indicated throughout the Figures by Δt_mon). For example, the monitoring time information may be received together with the wait indication in the access response message or may be broadcasted in system information. Alternatively, the monitoring time information may be preconfigured in the communication device 40, for example by hardcoding and/or by means of software configuration. The step 100 of monitoring may be performed in accordance with the monitoring time information available in the communication device 40. Further, according to some embodiments, the RNN 60 may inform the communication device 40 about a time delay period (indicated throughout the Figures by Δt_delay), for example in the access response message or by broadcasted system information. Alternatively, such time delay information (also indicated throughout the Figures by Δt_delay) may also be preconfigured in the communication device 40, for example by hardcoding and/or by means of software configuration. The delay time information may specify a delay time period during which the communication device 40 is not to monitor the concerned control channel after receipt of the wait indication, and the communication device 40 may perform the step 100 in accordance with the delay time information, for example only after expiration of the time period specified by the delay time information.

In a first option, the monitoring time information specifies a start time and an end time and between these two time instances the communication device 40 may monitor the respective channel. In a second option, the monitoring time information may specify an end time when the communication device 40 is to terminate the step 100, and the communication device 40 may initiate the monitoring in the step 100 immediately after receipt of the monitoring time information and may terminate the step 100 in accordance with the end time specified by the monitoring time information. In a third option, the monitoring time information specifies a time interval. The communication device 40 may start the monitoring when the waiting in the step 90 may start or, if delay time information may be available to the communication device 40, immediately after expiration of the time period specified by the delay time information.

According to some embodiments, the communication device 40 may occupy a non-monitoring state in which the communication device 40 might not be enabled to monitor the physical DL control channel or may alternatively occupy a monitoring state during which the communion device 40 may be enabled to monitor the respective channel. In this respect, the non-monitoring state and the non-monitoring state may be occupied by a communication device 40 in an mutually exclusive way and the communication 40 device may alternate between these two states. With respect to LTE radio access technology, such a non-monitoring state may relate to a Discontinuous Reception (DRX) non-active state and the monitoring state may relate to a state opposite to the DRX non-active state, for example a DRX active state. In such a DRX non-active state, the communication device 40 may deactivate its receiver circuitry, in order to decrease its power consumption necessary for the receiver circuitry. The communication device 40 may perform the step 100 irrespectively of being currently configured to be in the non-monitoring state. To this end, the communication device 40 may be instructed or configured such that the monitoring in the step 100 may override any current non-monitoring state of the communication device 40. Alternatively, the monitoring in step 100 does not override any current non-monitoring state of the communication device 40 and the communication device 40 may then monitor selectively the physical DL control channel in accordance with the received monitoring time information only when the communication device 40 may be currently configured to be in the monitoring state.

Further, according to some embodiments, the communication device 40 may receive a precedence indication from the RNN 60, which indication indicates to the communication device 40 that the non-monitoring state may precede (i.e. may override or have higher precedence than) a monitoring of the respective channel or may indicate that the non-monitoring state might not precede (i.e. might not override or might not have higher precedence than) the monitoring of the respective channel. The precedence indication may be received from the RNN 60, for example in the access response message or in broadcasted system information, or may be preconfigured in the communication device 40, for example by means of hardcoding and/or software configuration. The communication device 40 may monitor the physical DL control channel in accordance with the received precedence indication. For example, if the precedence information may indicate that the monitoring is to precede any non-monitoring state, the communication device 40 may perform the step 100 irrespectively of its current state. If the precedence information may indicate that the monitoring does not precede the non-monitoring state, the communication device 40 may perform the step 100 only when the communication device 40 may occupy a monitoring state, i.e. selectively.

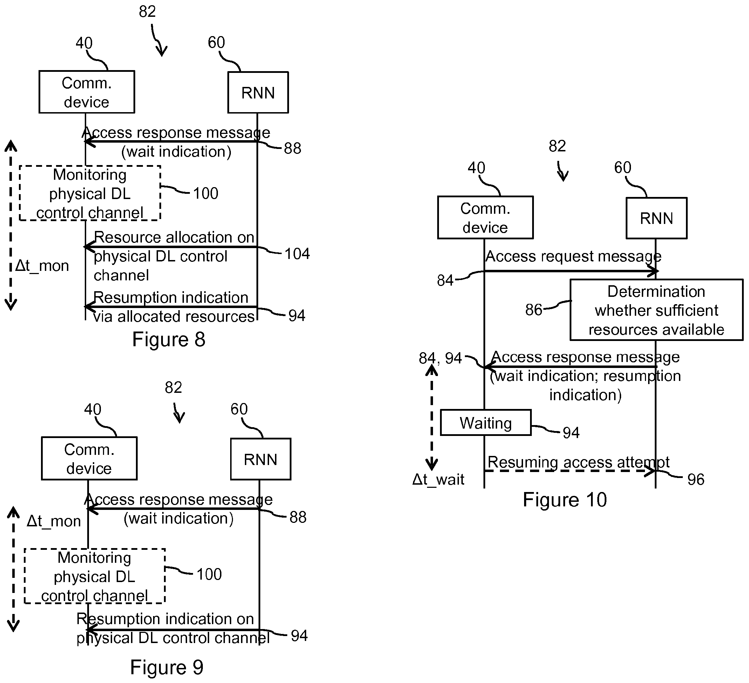

Figs. 8, 9 illustrate exemplary embodiments related to the step 94 of receiving the resumption indication and the step 100 of monitoring the physical DL control channel. The embodiments explained with reference to Fig. 7, in particular with reference to the wait time period, the monitoring time period and the delay time period, may be applicable in conjunction with the embodiments explained with reference to Figs. 8 and 9.

In some embodiments illustrated in Fig. 8, the communication device 40 may be in its idle mode attempting to transit into its connected mode. During the step 90, the RNN 60 may send resource allocation information on the physical DL control channel in a step 104. This resource allocation information may specify resources allocated on a physical DL data channel for receiving a data transmission from the RNN 60. Hence, the communication device 40 which may be currently monitoring the physical DL control channel may be informed based on the received resource allocation information to further monitor the allocated resources, in order to receive the resumption indication 94 via the allocated resources. To this end, the communication device 40 may receive the physical DL control channel and the physical DL data in parallel. In LTE radio access technology, this resource allocation information may be embodied as a DL scheduling assignment sent on PDCCH by means of which the communication device 40 is informed of a resource allocation of PDSCH resources. The resumption indication may be received via PDSCH. In more general terms, the resumption indication may be received via signalling on another, particularly different, protocol layer than the protocol layer which was used for signalling the wait indication, for example via RRC, Random Access Response (RAR) sent via the MAC layer, or L1/L2 signalling. The wait indication may, for example, be received via Radio Resource Control (RRC) signalling, via Media Access Control (MAC) signalling, or via Layer 1 (L1)/Layer 2 (L2) signalling. This measure may enable to include a large amount of information in the resumption indication or resumption message, respectively.

Fig. 9 illustrates further embodiments in which the communication device 40 may be in its connected mode. In one option, the resumption indication may be embodied as a resource allocation information received on the physical DL control channel, such that the communication device 40 monitoring, in the step 100, this channel may be accordingly enabled to receive the resumption indication. The resource allocation information may specify resources allocated by the RNN 60 on an UL data channel for UL transmission. For example, the resource allocation information may be embodied as an UL grant specifying resources usable by the communication device 40 on PUSCH. In an alternative option, the resumption indication is embodied as a message on the physical DL control channel and might be free of an or any resource allocation information specifying resources allocated on a physical uplink data channel for transmission of data. In more general terms, in these embodiments, the wait indication may be received via MAC signalling, L1/L2 signalling and/or the resumption indication may be received via signalling on another, particularly different, protocol layer than the protocol layer which was used for signalling the wait indication, for example via RRC, MAC or L1/L2 signalling such as PDCCH. This measure may represent a resource efficient approach in that minimal resources may be used for the resumption indication. Further, particularly in connection with the firstly mentioned option, upon receiving the resumption indication, the communication device 40 may proceed to transmit with the shortest possible delay (i.e. which corresponds to four subframes in LTE or, in other words, to 4 ms minus the TA value).

According to some embodiments explained with reference to Figs. 6 to 9, the kind of resources to be monitored in the step 100 may be preconfigured in the communication device 40, for example by means of hardcoding and/or software configuration, or may be signalled by the RNN 60 in a respective resource indication, which may be, for example, included in the access response message or in broadcasted system information.

Figure 10 illustrates a further embodiment of the method in which the communication device 40 may receive the wait indication and the resumption indication together in one message, for example the access response message, as indicated by combined steps 88, 94. The communication device 40 may wait, in response to the received wait indication and the received resumption indication, for a predetermined time period (indicated in Fig. 10 by Δt_wait). Information about this time period (also indicated in Fig. 10 by Δt_wait) may be received from the RNN 60, for example in the access response message or in broadcasted system information, or may be pre-configured in the communication device 40, for example by means of hardcoding and/or software configuration. At expiration of this time period, the communication device 40 may automatically resume the access attempt in a step 96. It is noted that the step 100 of monitoring explained above with reference to Fig. 6 to 9 might not be performed during the step 88. This embodiment may enable a reduction of signalling load on the air interface between the RNN 60 and the communication device 40 when implementing the described concepts.

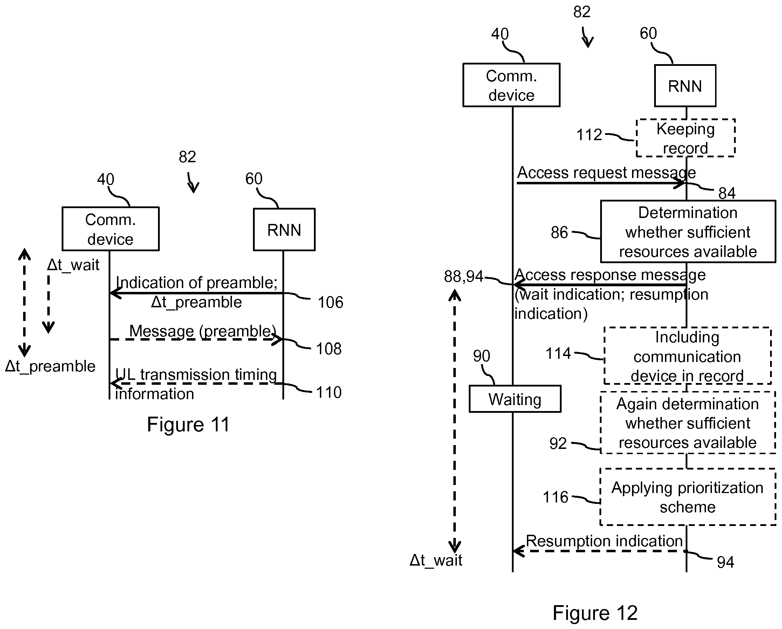

According to some embodiments illustrated in Fig. 11 and applicable in conjunction with the embodiments explained with reference to Fig. 4 to 10, the communication device 40 may have lost synchronization with the cellular network 82 during the step 90, and may require new, updated UL transmission timing information from the RNN 60, in order to resynchronize its UL transmission timing for its UL transmission of control data and payload data with the RNN 60. In this respect, the UL transmission timing may relate to a time relation between an UL transmission performed by the communication device 40 in relation to a performed DL transmission of the RNN 60.

To this end, the RNN 60 may send an indication of a preamble in a step 106 to the communication device 40. In one option, the indication of a preamble may be sent together with the wait indication in the access response message, or, in a second option, may be sent together with the resumption indication in one message. In the second option, the resumption indication may be embodied as a message and the indication of the preamble may be included in this message. This message may be free of the resource allocation information, as explained above with reference to Fig. 9. Both aforementioned options may be applicable for the communication device being in its idle mode or being in its connected mode. The communication device 40 may send in a step 108 a message including a preamble selected based on the received indication of the preamble in the step 106 to the RNN 60. In one embodiment, the communication device 40 may assume the indicated preamble to be valid until a further indication is received from the RNN 60 which may occur, for example, during the step 90 or after termination of the step 90. In a further embodiment, the communication device 40 may assume the indicated preamble to be valid only until about a little longer of termination of the step 90 of waiting or about termination of the step 100 of monitoring such that the communication device 40 may be enabled to use the indicated preamble even in such cases when the resumption indication may be received close to the end of the respective step 90, 100. The RNN 60 may, in turn, send the requested UL transmission timing information in a step 110 to the communication device 40. The communication device 40 may use the received UL timing information during the time period until new UL transmission timing information will be obtained from the RNN 60.

According to some embodiments, the RNN 60 may optionally send preamble time information (indicated in Fig. 11 by Δt_preamble) together with the indication of the preamble in one message, in the illustrated embodiment in the access response message, or a separate message. The preamble time information (also indicated in Fig. 11 by Δt_preamble) may specify a time period during which the indicated preamble may be usable for retrieving UL timing transmission information. For example, the preamble timing information may specify a time length of such a time period and the communication device 40 may interpret the time period to start at receipt of the preamble time information. In a further example, the preamble time information may specify a time length of the time period and a start time for the time period, such that the communication device 40 may start measuring the time period only after the start time. The communication device 40 may accordingly send the message in the step 108 in accordance with the received preamble time information, i.e. only when the time period specified by the preamble time information may be valid, for example has not expired. Else, the communication device may initiate a new access attempt as described above with reference to the step 98.

In some embodiments, the RNN 60 may have detected that the communication device 40 may have lost synchronization with the cellular network 82 and accordingly may send, based on the detection, the indication of the preamble to the communication device 40. Alternatively or additionally, the communication device 40 may detect at resuming the access attempt in the step 96 that the communication device 40 may have lost synchronization with the cellular network 82, and therefore may send the accordingly selected preamble in a combined step 96, 108 to the RNN 60 when resuming the access attempt.

In embodiments employing LTE radio access technology, the indication of the preamble may be embodied as an indication of a so-called dedicated preamble, such that the communication device 40 may perform a contention-free random access procedure with the RNN 60. The UL transmission timing information may correspond to a TA value.

With regard to embodiments in which the communication device 40 may perform a step during a time period specified by respective information, i.e. the waiting time information, the monitoring time information, the delay time information and/or the preamble time information, the communication device 40 may employ a timer to observe expiration of the concerned time period.

In the following, further method steps performed by the RNN 60 for the management of the access attempt of the communication device 40 will be explained. These method steps may be applicable to the above embodiments explained with reference to Figs. 4 to 11, and in particular to those explained with reference to Figs. 6 and 10.

The RNN 60 may keep in a step 112 a record about those communication devices to which a respective wait indication will be sent and/or has been sent. This step 112 is performed continuously since an activation of the RNN 60. In a step 114 which may be performed in association with the step 88, for example before or after the step 88, the RNN 60 may include the communication device 40 in the record based on a determination in the step 86 that there are not sufficient resources available to serve the communication device 40. Additionally or alternatively, the RNN 60 may determine again in an already above described step 92 whether sufficient resources may be available for serving the communication device 40 and may send in response to a positive determination the resumption indication in the step 94. Additionally to the step 114, the RNN 60 may apply a prioritization scheme in a step 116 to the communication devices 40 which are included in the record, and the RNN 60 may accordingly send the resumption indication in a step 94 in accordance with the applied prioritization scheme. For example, if the RNN 60 may include two communication devices 40 in the record, and one of these communication devices, for example the communication device 40, may require a lower amount of resources for being served, the RNN 60 may prioritize this communication device 40 for being served by sending the corresponding resumption indication for this communication device 40 first. Therefore a granularity for the reaction of the RNN 60 in view of an amount of resources being freed up may be accomplished.

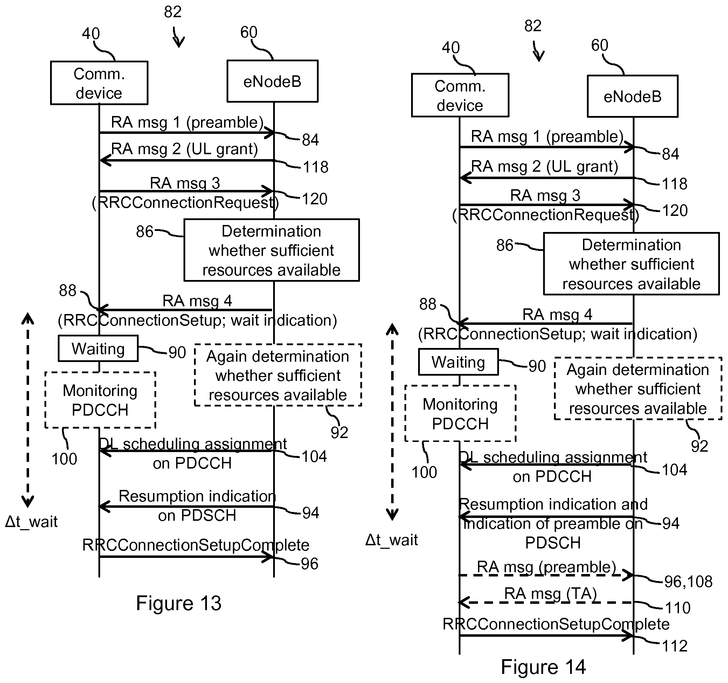

In the following, embodiments employing LTE radio access technology will be explained with reference to Figs. 13 to 16. A RNN 60 of a LTE based cellular network 82 is embodied as an eNodeB.

Figs. 13, 14 may relate to a contention-based random access procedure initiated by the communication device 40 for initially accessing the cellular network 82 and for data transmission. I.e. the communication device 40 is initially in its idle mode, i.e. its idle state, and attempts to transit into its connected mode, i.e. its RRC connected state, by means of the random access attempt. In Fig. 13, the communication is synchronized to the eNodeB 60, i.e. has a valid TA value, whereas in Fig. 14 the communication device 40 resynchronizes to the eNodeB, in order to obtain a valid TA value.

As illustrated in Fig. 13, the communication device 40 sends an access attempt related message in a step 84 to the eNodeB 60 which message is embodied as a RA message 1 including a preamble. The eNodeB 60 may return in a step 118 a further access attempt related message, i.e. a RA message 2 including an UL grant, to the communication device 40 which then sends an access request message, i.e. a RA message 3 including a MAC PDU in a step 120 to the eNodeB 60. The MAC PDU comprises a RRCConnectionRequest message. After a step 86 explained with reference to the above Figs. 4 to 13, the eNodeB 60 sends an access response message including a wait indication to the communication device 40. The access response message is embodied as a RA message 4 including a MAC PDU. The MAC PDU includes a RRCConnectionSetup message. Alternatively, the MAC PDU may comprise any other kind of RRC message, for example a RRCConnectionReject message or a new type of RRC message. In some embodiments, the wait indication may be embodied as one of the aforementioned RRC messages. Additionally or alternatively, in some embodiments, the MAC PDU may comprise a MAC control element in which the wait indication may be included. For example, the MAC PDU of the RA message 4 may comprise the RRC type message and a MAC CE, and the wait indication is included in the MAC CE. In some embodiments, the access response message may be embodied as L1/L2 control signalling comprising the respective wait indication, for example a message on PDCCH. The communication device 40 may accordingly perform steps 90 and optionally 100 and the eNodeB 60 may send, after having determined in an optional step 92 that sufficient resources may be available for serving the communication device 40, resource allocation information in the form of a DL scheduling assignment on PDCCH in a step 104 to the communication device 40. Thereupon, the communication device 40 may decode allocated PDSCH resources specified in the DL scheduling assignment, in order to receive the resumption indication sent in a step 94 via PDSCH. The resumption indication may, for example, have the form of an RRCConnectionSetup message and/or may be included in a MAC Control Element in the MAC PDU that carries (encapsulates) the RRCConnectionSetup message on the PDSCH. At receipt of the resumption indication, the communication device 40 terminates the step 90, and accordingly resumes the RA procedure by sending a RRCConnectionSetupComplete message in a step 96 to the eNodeB 60.

The embodiment of Fig. 14 is similar to the embodiment illustrated in Fig. 13, however, the eNodeB 60 sends together with the wait indication an indication of a dedicated preamble in a combined step 88, 106 to the communication device 40 to be used by the communication device if the TA value of the communication device times out during the wait period. Based on the received resumption indication, the communication device 40 sends a RA message including a preamble selected in accordance with the indication of the preamble received in a step 108 to the eNodeB 60, which accordingly sends in a RA message including the corresponding UL transmission timing information, i.e. the TA value, in a step 110 to the communication device 40. The RRCConnectionSetupComplete message is sent in accordance with the TA. Optionally, one or more of the steps 92, 112 and 116 explained with reference to Figs. 6 to 12 may be performed.

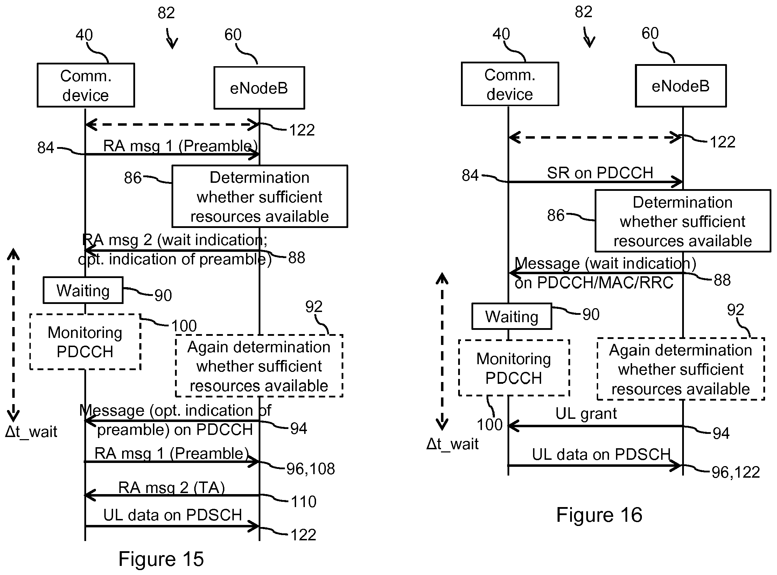

In the embodiments illustrated in Figs. 15, 16, the communication device 40 is in its connected mode, namely the RRC connected state, and may have optionally exchanged signalling with the eNodeB 60, as indicated by a dashed doubled sided arrow 122. The communication device 40 has lost its synchronization with the cellular network 82 in the embodiment of Fig. 15, and therefore sends a RA message 1 including a preamble to the eNodeB 60, which in return sends a RA message 2 without an UL grant, but including a TA value, to the communication device 40. This message is interpreted by the communication device 40 to include an implicit wait indication which indication corresponds to the absence of the UL grant. Optionally, the message may comprise an indication of a dedicated preamble to be used by the communication device 40 in case the communication device 40 may have lost UL synchronization with the cellular network 82 when resuming the access attempt. The communication device 40 waits in a step 90 in response to the received wait indication, and may monitor PDCCH resources in a step 100 for receiving the resumption indication on PDCCH. After having determined in a step 92 that sufficient resources are freed up again to serve the communication device 40, the eNodeB 60 sends a message to the communication device 40 on the PDCCH in a step 94. If the TA value of the communication device 40 is still valid (with a margin to account for the time between a downlink UL grant transmission on the PDCCH and the corresponding UL transmission on the transmission resources allocated by the UL grant), the message which the eNodeB 60 sends to the communication device 40 on the PDCCH in step 94 comprises an UL grant and represents the resumption indication. On the other hand, if the TA value of the communication device 40 has timed out (or will time out before the communication device 40 will have time to transmit on transmission resources allocated by an UL grant), the message which the eNodeB 60 sends to the communication device 40 on the PDCCH in the step 94 does not comprise any transmission resource allocation, i.e. any UL grant, but only informs the communication device 40 that the cellular network 82 now has resources to serve the access request from the communication device 40 and that the communication device 40 therefore may resume its access request by initiating a random access procedure to regain UL synchronization (i.e. to reacquire a valid TA value) and get transmission resources allocated. I.e. this PDCCH message represents the resumption indication. In addition, as an alternative to including the optional dedicated preamble together with the wait indication in RA message 2 in step 88, the eNodeB 60 may optionally include a dedicated preamble together with the resumption indication, i.e. in the message on the PDCCH in step 94, in the case where the TA value of the communication device 40 has timed out. This message, i.e. the message sent by the eNodeB 60 to the communication device 40 in step 94, as such represents a resumption indication for the communication device 40. In response to the received message, the communication device 40 resumes the access attempt. If the communication device 40 still has a valid timing advance (for example a TA value received from the eNodeB in the RA message 2), the communication device 40 utilizes the transmission resources allocated by the UL grant sent in the step 94 to transmit the pending data. If, on the other hand, the communication device 40 has lost UL synchronization, i.e. its timing advance has timed out and is no longer valid, the communication 40 has to regain UL synchronization before being able to transmit data in the UL. To this end, the communication device 40 resumes the access attempt in a step 96 by sending, in a combined step 96, 108, a RA message 1 including a preamble selected in accordance with the indicated dedicated preamble, and may receive a RA message 2 including a valid TA value from the eNodeB 60 in a step 110. Thereupon, the communication device 40 sends UL data on PDSCH in a step 122.

In the embodiment illustrated in Fig. 16, the communication device 40 sends an access request message embodied as a message including a scheduling request (SR) on PDCCH to the eNodeB 60. After having determined in a step 86 that the eNodeB 60 has not sufficient resources to serve the communication device 40, the eNodeB 60 sends a message including a wait indication on one of the following resources in a step 88: PDCCH, MAC, RRC. The preferred option is to send the wait indication in the form of a new or modified DL Control Information (DCI) message on the PDCCH, for example in the form of a modified UL grant. At receipt of the wait indication in the step 88, the communication device 40 waits in a step 90 and monitors in a step 100 PDCCH resources. After determining in a step 92 that the eNodeB 60 has sufficient resources to serve the communication device 40, the eNodeB 60 sends a message including an UL grant. This message or this UL grant is interpreted by the communication device 40 as a resumption indication to resume the access attempt. Thereupon, the communication device 40 resumes the access attempt procedure with the communication network 92 in a step 96 by sending data on PDSCH, utilizing the transmission resources allocated in the UL grant in a combined step 96, 122.

Embodiments of the steps 100, 112, 114, 116 explained above can be equally applicable to the methods illustrated in Figs. 13 to 16.

It is to be understood that the examples and embodiments as explained above are merely illustrative and susceptible to various modifications. For example, the concepts may be applied in various kinds of communication networks, without limitation to the illustrated example of a cellular communication network. For example, the concepts could also be applied to various kinds of wireline or wireless communication networks. Moreover, it is to be understood that the above concepts may be implemented by using correspondingly designed software to be executed by one or more processors of an existing device, or by using dedicated hardware.

## Claims

1. A method of managing an access attempt for accessing a cellular network (82), the method being performed by a communication device (40) and comprising:
- sending (84) to a radio network node (60) of the cellular network (82) an access request message for requesting access to the cellular network (82),
- receiving (88) from the radio network node (60) an access response message for the access request message, the access response message comprising a wait indication indicating to wait for a resumption indication before resuming the access attempt, the resumption indication indicating to resume the access attempt, and
- in response to the received wait indication, waiting (90) to resume the access attempt, wherein the communication device (40) is in an idle mode and the access response message is received after a random access response message, or wherein the communication device (40) is in a connected mode and the resumption indication is received via a physical downlink control channel,
the method further comprising:
- resuming (96) the access attempt in response to the received resumption indication, if the resumption indication is received during the step (90) of waiting.

2. The method according to claim 1, wherein the resumption indication is an explicit indication included in a message or wherein the resumption indication is embodied as a message of an access attempt procedure associated with the access attempt.

3. The method according to claim 1 or 2,
the method further comprising:
- monitoring (100), during at least a part of the step (90) of waiting, a physical downlink control channel for receiving the resumption indication.

4. The method according to claim 3,
wherein the communication device (40) is in the idle mode, the method further comprising:
- during the step (100) of monitoring, receiving (104) from the radio network node (60) resource allocation information via the physical downlink control channel, the resource allocation information specifying resources allocated on a physical downlink data channel for receiving a data transmission, and
- receiving (94) the resumption indication via the allocated resources.

5. The method according to claim 3,
wherein the communication device (40) is in the connected mode, wherein the resumption indication is embodied as resource allocation information specifying resources allocated on a physical uplink data channel for transmission of data or
wherein the communication device (40) is in the connected mode, wherein the resumption indication is embodied as a message being free of resource allocation information specifying resources allocated on a physical uplink data channel for transmission of data.

6. The method according to any one of claims 3 to 5,
the method further comprising:
- receiving (88) monitoring time information from the radio network node (60), the monitoring time information specifying at least one time period during which the step (100) of monitoring is to be performed, or
wherein at least one time period during which the step (100) of monitoring is to be performed is configured in the communication device (40).

7. The method according to any one of claims 3 to 6,
wherein the step (100) of monitoring is performed irrespectively of the communication device (40) being currently configured to be in a non-monitoring state, or
wherein the step (100) of monitoring is performed selectively for the communication device (40) being currently configured to be in a monitoring state.

8. The method according to any preceding claim,
the method further comprising:
- receiving (88) from the radio network node (60) an indication of a preamble to be used for re-synchronizing an uplink transmission timing of the communication device (40) with the radio network node (60).

9. The method according to any preceding claim,
the method further comprising:
- sending (98) to the radio network node (60) a new access request message for requesting access to the cellular network (82), if the resumption indication is not received.

10. A method of managing an access attempt of a communication device (40) for accessing a cellular network (82), the method being performed by a radio network node (60) of the cellular network (82) and comprising:
- receiving (84), from the communication device (40), an access request message for requesting access to the cellular network (82),
- in response to the received access request message, determining (86) whether sufficient resources are available for serving the communication device (40),
- in response to determining (86) that there are not sufficient resources available, sending (88) to the communication device (40) an access response message for the access request message, the access response message comprising a wait indication indicating to wait for a resumption indication before resuming the access attempt, the resumption indication indicating to resume the access attempt,
wherein the access attempt is for the communication device (40) in an idle mode and the access response message is sent after a random access response message, or wherein the access attempt is for the communication device (40) in a connected mode and the resumption indication is sent via a physical downlink control channel,
wherein the resumption indication is sent after the wait indication.

11. The method according to claim 10,
the method further comprising:
- in association with the step (88) of sending the wait indication, including (114) the communication device (40) in a record of the radio network node (60),
the method further comprising:
- applying (116) a prioritization scheme to the communication device (40) and at least one further communication device included in the record,
wherein the step (94) of sending the resumption indication is performed in accordance with the applied prioritization scheme.

12. The method according to claim 10 or 11,
the method further comprising:
- again determining (92) whether sufficient resources are available for serving the communication device (40), and
- in response to determining (92) that there are sufficient resources available, sending (94) the resumption indication to the communication device (40).

13. A communication device (40) for managing an access attempt of the communication device (40) for accessing a cellular network (82), the communication device (40) comprising an interface (42) for communication with a radio network node (60) of the cellular network (82) and at least one processor (44) adapted to:
- via the interface (42), send to the radio network node (60) an access request message for requesting access to the cellular network (82),
- via the interface (42), receive from the radio network node (60) an access response message for the access request message, the access response message comprising a wait indication indicating to wait for a resumption indication before resuming the access attempt, the resumption indication indicating to resume the access attempt, and
- in response to the received wait indication, wait to resume the access attempt, wherein the communication device (40) is adapted to be in an idle mode and the at least one processor (44) is adapted to receive the access response message after a random access response message, or wherein the communication device (40) is adapted to be in a connected mode and the at least one processor (44) is adapted to receive, via the interface (42), the resumption indication via a physical downlink control channel,
wherein the at least one processor (44) is further adapted to:
- resume the access attempt in response to the received resumption indication, if the resumption indication is received during the waiting.

14. The communication device (40) according to claim 13, wherein the communication device (40) is adapted to perform a method according to any of claims 2 to 9.

15. A radio network node (60) for a cellular network (82) and for managing an access attempt of a communication device (40) for accessing the cellular network (82), the radio network node (60) comprising an interface (62) for communication with the communication device (40) and at least one processor (64) adapted to:
- via the interface (62), receive from the communication device (40) an access request message for requesting access to the cellular network (82),
- in response to the received access request message, determine whether sufficient resources are available for serving the communication device (40),
- in response to determining that there are not sufficient resources available, send, via the interface (62), to the communication device (40) an access response message for the access request message, the access response message comprising a wait indication indicating to wait for a resumption indication before resuming the access attempt, the resumption indication indicating to resume the access attempt,
wherein the access attempt is for the communication device (40) in an idle mode and the at least one processor (64) is adapted to send the access response message after a random access response message, or wherein the access attempt is for the communication device (40) in a connected mode and the at least one processor (64) is adapted to send, via the interface (62), the resumption indication via a physical downlink control channel,
wherein the at least one processor (64) is adapted to send the resumption indication after the wait indication.

16. The radio network node (60) according to claim 15, wherein the radio network node (60) is adapted to perform a method according to claim 11 or 12

17. A communication system, comprising a communication device (40) according to any one of claims 13 or 14, and a radio network node (60) according to any one of claims 15 or 16.

## Patentansprüche

1. Verfahren zur Handhabung eines Zugriffsversuchs für Zugriff auf ein zellulares Netzwerk (82), wobei das Verfahren von einer Kommunikationsvorrichtung (40) durchgeführt wird und umfasst:
- Senden (84) einer Zugriffsanforderungsnachricht zum Anfordern von Zugriff auf das zellulare Netzwerk (82) an einen Funknetzwerkknoten (60) des zellularen Netzwerks (82),
- Empfangen (88) einer Zugriffsantwortnachricht vom Funknetzwerkknoten (60) für die Zugriffsanforderungsnachricht, wobei die Zugriffsantwortnachricht eine Warteanzeige umfasst, die anzeigt, dass vor der Wiederaufnahme des Zugriffsversuchs auf eine Wiederaufnahmeanzeige gewartet werden soll, wobei die Wiederaufnahmeanzeige anzeigt, dass der Zugriffsversuch wiederaufgenommen werden soll, und
- Warten (90) in Reaktion auf die empfangene Warteanzeige, um den Zugriffsversuch wiederaufzunehmen, wobei die Kommunikationsvorrichtung (40) in einem Ruhemodus ist, und die Zugriffsantwortnachricht nach einer Direktzugriffsantwortnachricht empfangen wird, oder wobei die Kommunikationsvorrichtung (40) in einem angeschlossenen Modus ist, und die Wiederaufnahmeanzeige über einen physikalischen Downlink-Steuerkanal empfangen wird,
wobei das Verfahren ferner umfasst:
- Wiederaufnehmen (96) des Zugriffsversuchs in Reaktion auf die empfangene Wiederaufnahmeanzeige, wenn die Wideraufnahmeanzeige während des Warteschritts (90) empfangen wird.

2. Verfahren nach Anspruch 1, wobei die Wiederaufnahmeanzeige eine explizite Anzeige ist, die in einer Nachricht enthalten ist, oder wobei die Wiederaufnahmeanzeige als eine Nachricht einer mit dem Zugriffsversuch assoziierten Zugriffsversuchsprozedur realisiert ist.

3. Verfahren nach Anspruch 1 oder 2,
wobei das Verfahren ferner umfasst:
- Überwachen (100) eines physikalischen Downlink-Steuerkanals auf den Empfang der Wiederaufnahmeanzeige während wenigstens eines Teils des Warteschritts (90).

4. Verfahren nach Anspruch 3,
wobei die Kommunikationsvorrichtung (40) im Ruhemodus ist, und das Verfahren ferner umfasst:
- Empfangen (104) von Ressourcenzuweisungsinformationen vom Funknetzwerkknoten (60) während des Überwachungsschritts (100) über den physikalischen Downlink-Steuerkanal, wobei die Ressourcenzuweisungsinformationen Ressourcen spezifizieren, die auf einem physikalischen Downlink-Datenkanal zum Empfangen einer Datenübertragung zugewiesen werden, und
- Empfangen (94) der Wiederaufnahmeanzeige über die zugewiesenen Ressourcen.

5. Verfahren nach Anspruch 3,
wobei die Kommunikationsvorrichtung (40) im angeschlossenen Modus ist, wobei die Wiederaufnahmeanzeige als Ressourcenzuweisungsinformationen realisiert ist, welche Ressourcen spezifizieren, die auf einem physikalischen Uplink-Datenkanal zur Übertragung von Daten zugewiesen werden, oder
wobei die Kommunikationsvorrichtung (40) im angeschlossenen Modus ist, wobei die Wiederaufnahmeanzeige als eine Nachricht realisiert ist, die frei von Ressourcenzuweisungsinformation ist, welche Ressourcen spezifizieren, die auf einem physikalischen Uplink-Datenkanal zur Übertragung von Daten zugewiesen werden.

6. Verfahren nach einem der Ansprüche 3 bis 5,
wobei das Verfahren ferner umfasst:
- Empfangen (88) von Überwachungszeitinformationen vom Funknetzwerkknoten (60), wobei die Überwachungszeitinformationen mindestens einen Zeitraum spezifizieren, während dessen der Überwachungsschritt (100) ausgeführt werden soll, oder
wobei mindestens ein Zeitraum, während dessen der Überwachungsschritt (100) ausgeführt werden soll, in der Kommunikationsvorrichtung (40) konfiguriert wird.

7. Verfahren nach einem der Ansprüche 3 bis 6,
wobei der Überwachungsschritt (100) ungeachtet dessen ausgeführt wird, ob die Kommunikationsvorrichtung (40) gegenwärtig so konfiguriert ist, dass sie in einem Nicht-Überwachungszustand ist, oder
wobei der Überwachungsschritt (100) für die Kommunikationsvorrichtung (40), die gegenwärtig so konfiguriert ist, dass sie in einem Überwachungszustand ist, selektiv ausgeführt wird.

8. Verfahren nach einem der vorhergehenden Ansprüche,
wobei das Verfahren ferner umfasst:
- Empfangen (88) einer Anzeige einer Präambel vom Funknetzwerkknoten (60), die zum Neusynchronisieren eines Uplink-Sendetakts der Kommunikationsvorrichtung (40) mit dem Funknetzwerkknoten (60) verwendet werden soll.

9. Verfahren nach einem der vorhergehenden Ansprüche,
wobei das Verfahren ferner umfasst:
- Senden (98) einer neuen Zugriffsanforderungsnachricht zum Anfordern von Zugriff auf das zellulare Netzwerk (82) an den Funknetzwerkknoten (60), wenn die Wiederaufnahmeanzeige nicht empfangen wird.

10. Verfahren zur Handhabung eines Zugriffsversuchs einer Kommunikationsvorrichtung (40) für Zugriff auf ein zellulares Netzwerk (82), wobei das Verfahren von einem Funknetzwerkknoten (82) durchgeführt wird und umfasst:
- Empfangen (84) einer Zugriffsanforderungsnachricht zum Anfordern von Zugriff auf das zellulare Netzwerk (82) von der Kommunikationsvorrichtung (40),
- Bestimmen (86) in Reaktion auf die empfangene Zugriffsanforderungsnachricht, ob genügend Ressourcen zum Versorgen der Kommunikationsvorrichtung (40) vorhanden sind,
- Senden (88) in Reaktion auf ein Bestimmen (86), dass nicht genügend Ressourcen vorhanden sind, einer Zugriffsantwortnachricht für die Zugriffsanforderungsnachricht an die Kommunikationsvorrichtung (40), wobei die Zugriffsantwortnachricht eine Warteanzeige umfasst, die anzeigt, dass vor der Wiederaufnahme des Zugriffsversuchs auf eine Wiederaufnahmeanzeige gewartet werden soll, wobei die Wiederaufnahmeanzeige anzeigt, dass der Zugriffsversuch wiederaufgenommen werden soll,
wobei der Zugriffsversuch für die Kommunikationsvorrichtung (40) in einem Ruhemodus ist, und die Zugriffsantwortnachricht nach einer Direktzugriffsantwortnachricht gesendet wird, oder wobei der Zugriffsversuch für die Kommunikationsvorrichtung (40) in einem angeschlossenen Modus ist, und die Wiederaufnahmeanzeige über einen physikalischen Downlink-Steuerkanal gesendet wird,
wobei die Wiederaufnahmeanzeige nach der Warteanzeige gesendet wird.

11. Verfahren nach Anspruch 10,
wobei das Verfahren ferner umfasst:
- Einfügen (114) der Kommunikationsvorrichtung (40) in einen Datensatz des Funknetzwerkknotens (60) in Verbindung mit dem Schritt (88) des Sendens der Warteanzeige,
wobei das Verfahren ferner umfasst:
- Anwenden (116) einer Priorisierungsschemas auf die Kommunikationsvorrichtung (40) und mindestens eine weitere Kommunikationsvorrichtung, die im Datensatz enthalten ist,
wobei der Schritt (94) des Sendens der Wiederaufnahmeanzeige gemäß dem angewendeten Priorisierungsschema ausgeführt wird.

12. Verfahren nach Anspruch 10 oder 11, wobei das Verfahren ferner umfasst:
- erneutes Bestimmen (92), ob genügend Ressourcen zum Versorgen der Kommunikationsvorrichtung (40) verfügbar sind, und
- Senden (94) der Wiederaufnahmeanzeige an die Kommunikationsvorrichtung (40) in Reaktion auf ein Bestimmen (92), dass genügend Ressourcen verfügbar sind.

13. Kommunikationsvorrichtung (40) zum Handhaben eines Zugriffsversuchs der Kommunikationsvorrichtung (40) für Zugriff auf ein zellulares Netzwerk (82), wobei die Kommunikationsvorrichtung (40) eine Schnittstelle (42) zur Kommunikation mit einem Funknetzwerkknoten (60) des zellularen Netzwerks (82) und mindestens einen Prozessor (44) umfasst, der ausgelegt ist zum:
- Senden einer Zugriffsanforderungsnachricht zum Anfordern von Zugriff auf das zellulare Netzwerk (82) über die Schnittstelle (42) an den Funknetzwerkknoten (60),
- Empfangen einer Zugriffsantwortnachricht für die Zugriffsanforderungsnachricht über die Schnittstelle (42) vom Funknetzwerkknoten (60), wobei die Zugriffsantwortnachricht eine Warteanzeige umfasst, die anzeigt, dass vor der Wiederaufnahme des Zugriffsversuchs auf eine Wiederaufnahmeanzeige gewartet werden soll, wobei die Wiederaufnahmeanzeige anzeigt, dass der Zugriffsversuch wiederaufgenommen werden soll, und
- Warten in Reaktion auf die empfangene Warteanzeige, um den Zugriffsversuch wiederaufzunehmen,
wobei die Kommunikationsvorrichtung (40) ausgelegt ist, um in einem Ruhemodus zu sein, und der mindestens eine Prozessor (44) so ausgelegt ist, dass er die Zugriffsantwortnachricht nach einer Direktzugriffsantwortnachricht empfängt, oder wobei die Kommunikationsvorrichtung (40) ausgelegt ist, um in einem angeschlossenen Modus zu sein, und der mindestens eine Prozessor (44) so ausgelegt ist, dass er die Wiederaufnahmeanzeige über die Schnittstelle (42) über einen physikalischen Downlink-Steuerkanal empfängt,
wobei der mindestens eine Prozessor (44) ferner ausgelegt ist zum:
- Wiederaufnehmen des Zugriffsversuchs in Reaktion auf die empfangene Wiederaufnahmeanzeige, wenn die Wideraufnahmeanzeige während des Wartens empfangen wird.

14. Kommunikationsvorrichtung (40) nach Anspruch 13, wobei die Kommunikationsvorrichtung (40) zum Durchführen eines Verfahrens nach einem der Ansprüche 2 bis 9 ausgelegt ist.

15. Funknetzwerkknoten (60) für ein zellulares Netzwerk (82) und zum Handhaben eines Zugriffsversuchs einer Kommunikationsvorrichtung (40) für Zugriff auf das zellulare Netzwerk (82), wobei der Funknetzwerkknoten (40) eine Schnittstelle (62) zur Kommunikation mit der Kommunikationsvorrichtung (60) und mindestens einen Prozessor (64) umfasst, der ausgelegt ist zum:
- Empfangen einer Zugriffsanforderungsnachricht zum Anfordern von Zugriff auf das zellulare Netzwerk (82) von der Kommunikationsvorrichtung (40) über die Schnittstelle (62),
- Bestimmen in Reaktion auf die empfangene Zugriffsanforderungsnachricht, ob genügend Ressourcen zum Versorgen der Kommunikationsvorrichtung (40) vorhanden sind,
- Senden in Reaktion auf ein Bestimmen, dass nicht genügend Ressourcen vorhanden sind, einer Zugriffsantwortnachricht für die Zugriffsanforderungsnachricht über die Schnittstelle (62) an die Kommunikationsvorrichtung (40), wobei die Zugriffsantwortnachricht eine Warteanzeige umfasst, die anzeigt, dass vor der Wiederaufnahme des Zugriffsversuchs auf eine Wiederaufnahmeanzeige gewartet werden soll, wobei die Wiederaufnahmeanzeige anzeigt, dass der Zugriffsversuch wiederaufgenommen werden soll,
wobei der Zugriffsversuch für die Kommunikationsvorrichtung (40) in einem Ruhemodus ist, und der mindestens eine Prozessor (64) so ausgelegt ist, dass er die Zugriffsantwortnachricht nach einer Direktzugriffsantwortnachricht sendet, oder wobei der Zugriffsversuch für die Kommunikationsvorrichtung (40) in einem angeschlossenen Modus ist, und der mindestens eine Prozessor (64) so ausgelegt ist, dass er die Wiederaufnahmeanzeige über die Schnittstelle (62) über einen physikalischen Downlink-Steuerkanal sendet,
wobei der mindestens eine Prozessor (64) so ausgelegt ist, dass er die Wiederaufnahmeanzeige nach der Warteanzeige sendet.

16. Funknetzwerkknoten (60) nach Anspruch 15, wobei der Funknetzwerkknoten (60) zum Durchführen eines Verfahrens nach Anspruch 11 oder 12 ausgelegt ist.

17. Kommunikationssystem, umfassend eine Kommunikationsvorrichtung (40) nach einem der Ansprüche 13 oder 14 und einen Funknetzwerkknoten (60) nach einem der Ansprüche 15 oder 16.

## Revendications

1. Procédé de gestion d'une tentative d'accès pour accéder à un réseau cellulaire (82), le procédé étant effectué par un dispositif de communication (40) et comprenant :
- l'envoi (84), à un noeud de réseau radio (60) du réseau cellulaire (82), d'un message de demande d'accès pour demander un accès au réseau cellulaire (82),
- la réception (88), en provenance du noeud de réseau radio (60), d'un message de réponse d'accès pour le message de demande d'accès, le message de réponse d'accès comprenant une indication d'attente indiquant d'attendre une indication de reprise avant de reprendre la tentative d'accès, l'indication de reprise indiquant de reprendre la tentative d'accès, et
- en réponse à l'indication d'attente reçue, l'attente (90) pour reprendre la tentative d'accès, dans lequel le dispositif de communication (40) est dans un mode de veille et le message de réponse d'accès est reçu après un message de réponse d'accès aléatoire, ou dans lequel le dispositif de communication (40) est dans un mode connecté et l'indication de reprise est reçue par l'intermédiaire d'un canal de commande de liaison descendante physique,
le procédé comprenant en outre :
- la reprise (96) de la tentative d'accès en réponse à l'indication de reprise reçue, si l'indication de reprise est reçue au cours de l'étape (90) d'attente.

2. Procédé selon la revendication 1, dans lequel l'indication de reprise est une indication explicite incluse dans un message ou dans lequel l'indication de reprise est mise en oeuvre sous la forme d'un message d'une procédure de tentative d'accès associée à la tentative d'accès.

3. Procédé selon la revendication 1 ou 2,
le procédé comprenant en outre :
- la surveillance (100), au cours d'au moins une partie de l'étape (90) d'attente, d'un canal de commande de liaison descendante physique pour recevoir l'indication de reprise.

4. Procédé selon la revendication 3,
dans lequel le dispositif de communication (40) est dans le mode de veille, le procédé comprenant en outre :
- au cours de l'étape (100) de la surveillance, la réception (104), en provenance du noeud de réseau radio (60), d'informations d'allocation de ressources par l'intermédiaire du canal de commande de liaison descendante physique, les informations d'allocation de ressources spécifiant des ressources allouées sur un canal de données de liaison descendante physique pour la réception d'une transmission de données, et
- la réception (94) de l'indication de reprise par l'intermédiaire des ressources allouées.

5. Procédé selon la revendication 3,
dans lequel le dispositif de communication (40) est dans le mode connecté, dans lequel l'indication de reprise est mise en oeuvre sous la forme d'informations d'allocation de ressources spécifiant des ressources allouées sur un canal de données de liaison montante physique pour une transmission de données ou
dans lequel le dispositif de communication (40) est dans le mode connecté, dans lequel l'indication de reprise est mise en oeuvre sous la forme d'un message dépourvu d'informations d'allocation de ressources spécifiant des ressources allouées sur un canal de données de liaison montante physique pour une transmission de données.

6. Procédé selon l'une quelconque des revendications 3 à 5,
le procédé comprenant en outre :
- la réception (88) d'informations de temps de surveillance en provenance du noeud de réseau radio (60), les informations de temps de surveillance spécifiant au moins une période de temps au cours de laquelle l'étape (100) de la surveillance doit être effectuée, ou
dans lequel au moins une période de temps au cours de laquelle l'étape (100) de la surveillance doit être effectuée est configurée dans le dispositif de communication (40).

7. Procédé selon l'une quelconque des revendications 3 à 6,
dans lequel l'étape (100) de la surveillance est effectuée indépendamment du dispositif de communication (40) qui est actuellement configuré pour être dans un état de non surveillance, ou
dans lequel l'étape (100) de la surveillance est effectuée sélectivement pour le dispositif de communication (40) qui est actuellement configuré pour être dans un état de surveillance.

8. Procédé selon l'une quelconque des revendications précédentes,
le procédé comprenant en outre :
- la réception (88), en provenance du noeud de réseau radio (60), d'une indication d'un préambule à utiliser pour la resynchronisation d'un timing de transmission de liaison montante du dispositif de communication (40) avec le noeud de réseau radio (60).

9. Procédé selon l'une quelconque des revendications précédentes,
le procédé comprenant en outre :
- l'envoi (98), au noeud de réseau radio (60), d'un nouveau message de demande d'accès pour demander un accès au réseau cellulaire (82), si l'indication de reprise n'est pas reçue.

10. Procédé de gestion d'une tentative d'accès d'un dispositif de communication (40) pour accéder à un réseau cellulaire (82), le procédé étant effectué par un noeud de réseau radio (60) du réseau cellulaire (82) et comprenant :
- la réception (84), en provenance du dispositif de communication (40), d'un message de demande d'accès pour demander un accès au réseau cellulaire (82),
- en réponse au message de demande d'accès reçu, la détermination (86) si des ressources suffisantes sont disponibles pour desservir le dispositif de communication (40),
- en réponse à la détermination (86) qu'il n'y a pas de ressources suffisantes disponibles, l'envoi (88), au dispositif de communication (40), d'un message de réponse d'accès pour le message de demande d'accès, le message de réponse d'accès comprenant une indication d'attente indiquant d'attendre une indication de reprise avant de reprendre la tentative d'accès, l'indication de reprise indiquant de reprendre la tentative d'accès,
dans lequel la tentative d'accès est pour le dispositif de communication (40) dans un mode de veille et le message de réponse d'accès est envoyé après un message de réponse d'accès aléatoire, ou dans lequel la tentative d'accès est pour le dispositif de communication (40) dans un mode connecté et l'indication de reprise est envoyée par l'intermédiaire d'un canal de commande de liaison descendante physique,
dans lequel l'indication de reprise est envoyée après l'indication d'attente.

11. Procédé selon la revendication 10,
le procédé comprenant en outre :
- en association avec l'étape (88) de l'envoi de l'indication d'attente, l'inclusion (114) du dispositif de communication (40) dans un enregistrement du noeud de réseau radio (60),
le procédé comprenant en outre :
- l'application (116) d'un schéma de priorisation au dispositif de communication (40) et à au moins un autre dispositif de communication inclus dans l'enregistrement,
dans lequel l'étape (94) de l'envoi de l'indication de reprise est effectuée en fonction du schéma de priorisation appliqué.

12. Procédé selon la revendication 10 ou 11,
le procédé comprenant en outre :
- la détermination à nouveau (92) si des ressources suffisantes sont disponibles pour desservir le dispositif de communication (40), et
- en réponse à la détermination (92) qu'il y a des ressources suffisantes disponibles, l'envoi (94) de l'indication de reprise au dispositif de communication (40).

13. Dispositif de communication (40) destiné à gérer une tentative d'accès du dispositif de communication (40) pour accéder à un réseau cellulaire (82), le dispositif de communication (40) comprenant une interface (42) pour une communication avec un noeud de réseau radio (60) du réseau cellulaire (82) et au moins un processeur (44) apte à effectuer :
- par l'intermédiaire de l'interface (42), l'envoi, au noeud de réseau radio (60), d'un message de demande d'accès pour demander un accès au réseau cellulaire (82),
- par l'intermédiaire de l'interface (42), la réception, en provenance du noeud de réseau radio (60), d'un message de réponse d'accès pour le message de demande d'accès, le message de réponse d'accès comprenant une indication d'attente indiquant d'attendre une indication de reprise avant de reprendre la tentative d'accès, l'indication de reprise indiquant de reprendre la tentative d'accès, et
- en réponse à l'indication d'attente reçue, l'attente pour reprendre la tentative d'accès, dans lequel le dispositif de communication (40) est apte à être dans un mode de veille et l'au moins un processeur (44) est apte à effectuer la réception du message de réponse d'accès après un message de réponse d'accès aléatoire, ou dans lequel le dispositif de communication (40) est apte à être dans un mode connecté et l'au moins un processeur (44) est apte à effectuer la réception, par l'intermédiaire de l'interface (42), de l'indication de reprise par l'intermédiaire d'un canal de commande de liaison descendante physique,
dans lequel l'au moins un processeur (44) est en outre apte à effectuer :
- la reprise de la tentative d'accès en réponse à l'indication de reprise reçue, si l'indication de reprise est reçue au cours de l'attente.

14. Dispositif de communication (40) selon la revendication 13, dans lequel le dispositif de communication (40) est apte à effectuer un procédé selon l'une quelconque des revendications 2 à 9.

15. Noeud de réseau radio (60) pour un réseau cellulaire (82) et destiné à gérer une tentative d'accès d'un dispositif de communication (40) pour accéder au réseau cellulaire (82), le noeud de réseau radio (60) comprenant une interface (62) pour une communication avec le dispositif de communication (40) et au moins un processeur (64) apte à effectuer :
- par l'intermédiaire de l'interface (62), la réception, en provenance du dispositif de communication (40), d'un message de demande d'accès pour demander un accès au réseau cellulaire (82),
- en réponse au message de demande d'accès reçu, la détermination si des ressources suffisantes sont disponibles pour desservir le dispositif de communication (40),
- en réponse à la détermination qu'il n'y a pas de ressources suffisantes disponibles, l'envoi, par l'intermédiaire de l'interface (62), au dispositif de communication (40), d'un message de réponse d'accès pour le message de demande d'accès, le message de réponse d'accès comprenant une indication d'attente indiquant d'attendre une indication de reprise avant de reprendre la tentative d'accès, l'indication de reprise indiquant de reprendre la tentative d'accès,
dans lequel la tentative d'accès est pour le dispositif de communication (40) dans un mode de veille et l'au moins un processeur (64) est apte à effectuer l'envoi du message de réponse d'accès après un message de réponse d'accès aléatoire, ou dans lequel la tentative d'accès est pour le dispositif de communication (40) dans un mode connecté et l'au moins un processeur (64) est apte à effectuer l'envoi, par l'intermédiaire de l'interface (62), de l'indication de reprise par l'intermédiaire d'un canal de commande de liaison descendante physique,
dans lequel l'au moins un processeur (64) est apte à effectuer l'envoi de l'indication de reprise après l'indication d'attente.

16. Noeud de réseau radio (60) selon la revendication 15, dans lequel le noeud de réseau radio (60) est apte à effectuer un procédé selon la revendication 11 ou 12.

17. Système de communication, comprenant un dispositif de communication (40) selon l'une quelconque des revendications 13 et 14, et un noeud de réseau radio (60) selon l'une quelconque des revendications 15 et 16.
